Europäisches Patentamt

European Patent Office

Office européen des brevets

(11) Publication number: **0 528 396 A2**

(12) **EUROPEAN PATENT APPLICATION**

(21) Application number: **92114008.3**

(22) Date of filing: **17.08.92**

(51) Int. Cl.⁵: **G05B 23/02**

(30) Priority: **21.08.91 US 748299**

(43) Date of publication of application:
**24.02.93 Bulletin 93/08**

(84) Designated Contracting States:
**DE FR GB**

�largeApplicant: **International Business Machines Corporation**
**Old Orchard Road**
**Armonk, N.Y. 10504(US)**

(72) Inventor: **Higgins, Susan Beatrice**
**7110 Northwest 38th Street**
**Coral Springs, Florida 33066(US)**

Inventor: **Schroeder, Kurt Norman**
**319 Antoinette Drive**
**Endicott, New York 13760(US)**
Inventor: **Sheftic, Richard Joseph**
**1113 Sapphire Drive**
**Endicott, New York 13760(US)**
Inventor: **Swearingen, Craig Ardner**
**8905 Marthas Drive**
**Austin, Texas 78717(US)**

(74) Representative: **Jost, Ottokarl, Dipl.-Ing.**
**IBM Deutschland GmbH Patentwesen und**
**Urheberrecht Schönaicher Strasse 220**
**W-7030 Böblingen (DE)**

(54) **Method of controlling an industrial process.**

㊝ Disclosed is a method of controlling an industrial process. This process has a plurality of states and is controlled by a client-server multi-processor control system operating in a windowed, multi-tasking, multi-thread environment. The control method starts by detecting an anomalous state of the industrial process and displaying a modal alert event box corresponding to the anomalous state of the industrial process. The process further generates an alerts pending indication in maximized applications window which displays as long as any alerts corresponding to anomalous states remain unresolved. In further embodiments, the process generates a pending alerts window listing all unresolved alerts corresponding to anomalous states of the industrial process; and an alert detail window corresponding to the unresolved anomalous state of the physical system.

EP 0 528 396 A2

FIG.1

In computer based industrial control systems, a single computer or a host server-client multi-computer system communicates with one or more industrial processes, tools, cells or islands, through a local area network. The process measurements are measured by various types of transducers, transmitted through communications lines to the computers, and collected and processed to yield process control outputs.

However, process parameters can, and frequently do exceed normal limits or the ability of the digital control system to respond thereto. These events, which are associated with, for example, upsets, equipment failures, and the like, require operator intervention to restore the industrial process. Systems exist for notifying the occurrence of these events. However, most systems do little more then merely notifying the operator of the event, and thereafter logging these events. While systems exist for notifying he operator of the state of other monitored process and/or other processors on a local area network, and for logging events, there is no method for continuously displaying the existence of unresolved alerts in an industrial process control system.

U.S. Patent 4,974,173 Daniel G. Bobrow et al. for SMALL-SCALE WORKSPACE REPRESENTATIONS INDICATING ACTIVITIES BY OTHER USERS describes a collaborative system in which a body of shared data may be accessed by more than one user, and a small-scale representation of the body of shared data displayed to one user includes an indication of the activities of other users. According to Bobrow et al. a user that is not viewing the shared data at full scale can obtain information about the activities of other users from a small-scale representation. The small-scale representation can indicate the type of activity, the extent or rate of changes in the shared data, which other users are viewing the full-scale representation, or can show the shared data in shrunken form, indicating the parts that have been changed. The extent or rate of changes can be indicated with a quantitative indicator such as a gauge. Bobrow et al. relates specifically to a collaborative system where upon receiving a signal requesting activity affecting a first body of shared data from a respective user input device of a second workstation, the systems presents an indication of the first workstation's activity at the second workstation.

U.S. Patent 4,965,772 to Katherine J. Anderson, Arthur A. Daniel, Thomas J. Gelm, Raymond F. Kiter, John P. Meeham, Robert E. Moore, John G. Stevenson, and Lawrence C. Troan, for METHOD AND APPARATUS FOR COMMUNICATION NETWORK ALERT MESSAGE CONSTRUCTION describes a system for the construction and display of operator messages representative of alert conditions in a network. Code points, which are strings of bits, are generated in response to an event in a device attached to the network. The code points are used to index predefined tables that contain relatively short units of text messages in operator selectable languages to be used in building an operator's information display. A product attached to a network, an alert sender, will generate a series of code points representative of desired display messages for an operator. The messages are independent of the specific alert sending product insofar as an alert receiver is concerned. The operator can also choose between detailed and general display messages. The code points are hierarchically arranged so that if the alert receiver does not have the most up to date set of messages, the alert receiver will display a more generic message which is still representative of the event.

The described system functions in an environment where there are a plurality of types of events of which notification is to be provided. The system includes means for receiving a plurality of code points associated with an event and an index for cross referencing each set of code points to units of text corresponding thereto. The selected units of text (selected by the index) are displayed, thereby indicating the event associated with the text.

The code points are hierarchically organized into (at least two) levels of specificity of correspondingly to increasingly more detailed text. The system allows the user to preselect levels of detail or specificity to be displayed.

Anderson et al. also describe the use of the system in an environment where there are a plurality of types of events of which notification is provided, and the system has generic units of text which are representative of classes of detected events.

Thus, a need exists for an on-line, real time method for continuously displaying the existence of unresolved alerts in an industrial process control system. The method should be one having the capability of displaying pending or open alert (exception condition) event indications to an industrial process control user.The system should display the exception condition event indication regardless of the display state of running application programs windows, for example, maximized application windows, at the time the exception condition is detected.

The problem of the invention is to provide display of pending or open alert (exception condition) event indications to an industrial process control user in a distributed client/server Graphical User Interface (GUI) environment, and

to display the user the exception condition event indication regardless of the display state of application windows, for example, maximized application windows, at the time the exception condition is detected.

According to the method of the invention, exception condition (alert) event indications are displayed to the user in a distributed client/server Graphical User Interface (GUI) industrial process control environment. In a distributed client/server GUI environment, one or more client industrial process control application programs make user interface service requests of a user interface server program. The server program satisfies the service requests and manages the display of the requested windows to the clients. The server program can manage the display of many application windows concurrently. The user interface server program may display zero or more windows of varying size and position concurrently on the display screen of any client terminal.

The system is intended for the notification and logging of Alert events. An Alert event is an event is one requiring immediate notification, and possibly immediate action. Such events include temperature and pressure excursions, workpiece failures, sensor and transducer failures and upsets, and the like.

The server has the capability of responding to exception condition (alert) events by displaying an Alert Message over a running application program display, maintaining a Pending Alerts Window, and providing an Alert Indication on running application program windows whenever there are unresolved condition (alert) events in the the Pending Alerts Window.

According to the method of the invention, this alert event presentation is an immediate presentation to a least one terminal in the process control network. In addition to the initial alert event presentation that must be acknowledged by the user, an indication of any pending alert conditions is displayed continuously to the user. The existence of pending alerts, both (1) unacknowledged, and (2) acknowledged but not acted upon by the user, must be displayed regardless of the state of the display windows, and the presence of "maximized" display windows. In the case of "maximized" display windows, a portion of the physical display screen cannot be reserved for the exclusive purpose of displaying the alert condition indications. Instead, the display is in the action bar at the top of the maximized application display.

The invention may be understood by reference to the FIGURES appended hereto.

FIGURE 1 shows a schematic view of an integrated manufacturing system including the alert notification system of the invention.

FIGURE 2 shows a flow chart of the method of the invention.

FIGURE 3 shows a Task Box display on a client terminal in a windowed, multi-tasking, multithread environment, showing the ALERT NOTIFICATION indicia of the invention.

FIGURE 4 shows an Alerts Message Box of the invention.

FIGURE 5 shows a Pending Alerts Window of the invention.

FIGURE 6 shows an Alert Detail Window of the invention.

The invention relates to the presentation of exception condition (alert) event indications to the user in a distributed client/server Graphical User Interface (GUI) environment. In a distributed client/server GUI environment, one or more client application programs make user interface service requests of a user interface server program. The server program is responsible for handling the details necessary to satisfy the service request and manage the display of the requested window. The server program could be managing the display of many application windows concurrently. On a given computer system in this GUI environment, the user interface server program may be displaying zero or more windows of varying size and position concurrently on the display screen.

A window is considered the "active" window when it is displayed in the foreground and is logically connected to the input devices (e.g., a keyboard). An active window may be "maximized." An active "maximized" window consumes the full physical display screen, completely obscuring any other display windows and icons.

An alert event is an anomalous event is one requiring immediate notification, and possibly immediate action. Such events include temperature and pressure excursions, workpiece failures, sensor and transducer failures and upsets, and the like.

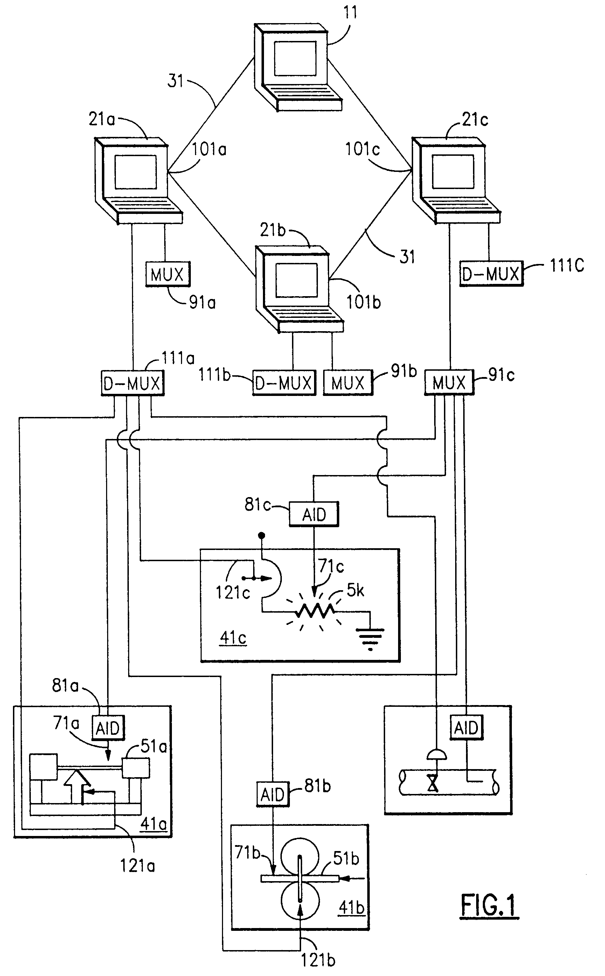

A typical industrial system is shown in the schematic of FIGURE 1. The industrial system 1 includes a host or server processor, 11, and a plurality of client processors 21a, 21b, 21c, on a local area network 31. Also included on the local area network 31 are a plurality of islands or cells 41a, 41b, 41c of the controlled industrial process. Each cell or island 41a, 41b, and 41c includes a physical process, 51a, 51b, and 51c, as, for example, a robot, a machine tool, or a heat exchanger, a sensor, 61a, 61b, or 61c, as a thermometer, a strain gauge, a pressure sensor, a tactile sensor, or a machine vision device. An individual sensor is connected to the host server 11 through a transducer 71a, 71b, or 71c, possibly including distributed analog to digital conversion means 81a, 81b, and 81c, optionally to and through a suitable multiplexer 91a, 91b, 91c, to an I/O port, as an RS-232C serial communications port 101a, 101b, and 101c, to a client processor 21a, 21b, 21c. The control inputs and sensors measurements are processed according to process dynamics and control applications running in the server 11 or a client processor 21a, 21b, 21c, and an output may be generated. The output may be a valve position or setting, a resistance heater voltage, a cutting tool position , or the like. This setting is sent through a client 21a, 21b, or 21c communications port 101a, 101b, or 101c, optionally including demultiplexing means, 111a, 111b, 111c, to an effector 121a, 121b, 121c. The effector 121a, 121b, 121c may be proceeded by a digital to analog convertor, may include a digital to analog convertor, or may even be numerically controlled or direct digitally controlled.

In the operation and control of an industrial process, certain events may require immediate notification and even immediate notification. These events may be "off the scale" excursions, "runaways," catastrophic failures, equipment failures, anomalous measurements or responses, or responses outside of a defined time or parameter range and possibly outside of normal process limits. These conditions require operator action, and posting on a pending alerts window without the opportunity of "filing" or "deferring."

Other events may require notification for later, but deferrable and/or schedulable corrective action. These are sensor responses that are within normal process limits but outside of a narrowly defined time or parameter range. Such responses may be indicative of a buildup of a thermally insulating byproduct or corrosion product in a chemical or thermal process, the gradual loss of catalytic activity in a chemical process, deterioration of a cutting tool in a materials removal process. These conditions require listing on a Pending Alerts window, with the opportunity for "filing" or "deferring" while retaining listing thereon until corrected.

According to the method of the invention, an alert event presentation is an immediate presentation to a least one terminal in the process control network. In addition to the initial alert event presentation that must be acknowledged by the user, an indication of any pending alert conditions must be displayed continuously to the user. The existence of pending alerts, both (1) unacknowledged, and (2) acknowledged but not acted upon by the user, must be displayed regardless of the state of the display windows, and the presence of "maximized" display windows. In the case of "maximized" display windows, a portion of the physical display screen cannot be reserved for the exclusive purpose of displaying the alert condition indications.

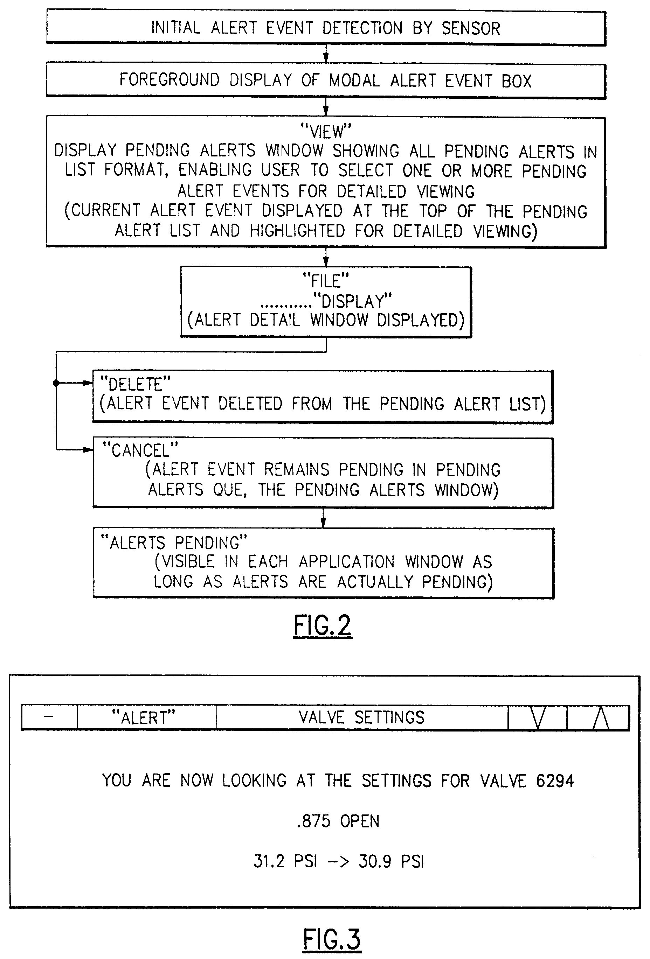

The method for visually presenting alert event information to the user is as described below and shown in the Flow Chart of FIGURE 2. The first action is an Initial Alert Event Detection by a sensor.

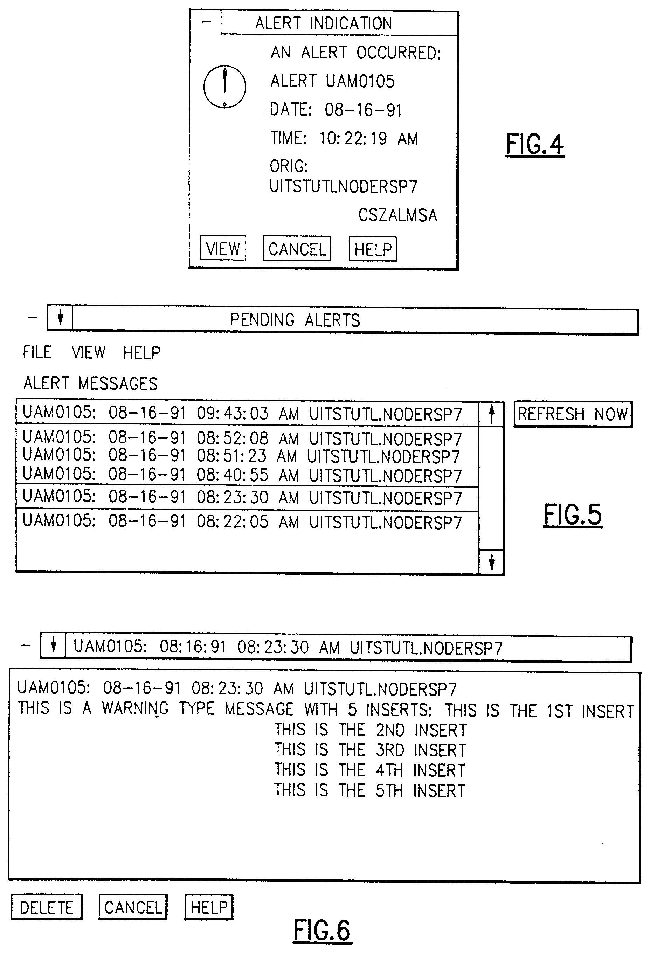

The second action is the Display of a Modal Alert Event Message Box to the user. This occurs each time an appropriate user interface server application program detects that an alert event has occurred. This message box window, shown in FIGURE 4, may contain such information as the date and time of the alert event, the identification of the alert event (e.g., UAH0105 in FIGURE 4), and the identification of the alert source. Upon display by the user interface server program, the message box window is the "active" window and is therefore displayed in the foreground. The message box window of FIGURE 4 offers the user two options on disposition of the alert event. These are "View" and "Cancel."

"View" ultimately allows the user to obtain more information then provided by the Alerts Message Box as more fully described hereinbelow, while "Cancel" allows the removal of the the alert notification from the queue of pending alerts, as when appropriate action has been taken.

Because the message box is modal, the user must take one of the actions presented in the message box before interacting with other displayed windows. Once the user takes one of the actions presented in the message box, the message box is removed from the display. A modal message box is used to force the user to take an action to acknowledge the alert event occurrence. Selection of this action results in the display of the Pending Alerts Window, shown in FIGURE 5. The Pending Alerts Window displays all of the pending alerts in a list format and enables the user to select one or more of the pending alert events for detailed viewing.

Turning now to FIGURE 5, the Pending Alerts Window, note that the current alert event (the alert event displayed in the alert event message box) is displayed at the top of the pending alert list and is preselected (highlighted) for detailed viewing. At this point, the user would typically select the FILE action bar choice, and subsequently select the DISPLAY action from the dropdown list. Selection of the FILE and DISPLAY sequence causes the alert detail window of FIGURE 6 to be displayed.

FIGURE 6 shows the Alert Detail Window At this point, the user has the option to DELETE the alert, for example without taking corrective action. This results in the alert event being deleted from the pending alert list, or to CANCEL which results in the alert event remaining pending in a Pending Alerts Queue and in the Pending Alerts Window.

One additional action is taken by the user interface server program upon detection of an alert event. For each window that has either been 1) loaded into memory but not yet displayed, for example in the Pending Alerts Window of FIGURE 5 or the Alert Detail Window of FIGURE 6, or, 2) that has already so displayed, but not resolved by appropriate corrective action, the user interface server program turns on (makes visible) the ALERTS PENDING indicator shown in FIGURE 3.

This ALERTS PENDING indicator is located on the window title bar, to the right of the SYSTEM MENU icon (the "minus sign" in the upper left hand corner of an OS/2 window) and to the left of the actual window title of the current application, which is typically a "maximized" application. By displaying the ALERTS PENDING indicator in this position on each window, the indicator is visible to the user on each maximized application window. This prevents the indicator from being obscured by a maximized window since the indicator is visible on every window that is currently displayed at the time the user interface server program detects the alert event.

Selection of the CANCEL action indicates the user does not want any further Alerts Message Box presentation relating to this alert at this time. The alert event has already been added to the pending alert queue and will be included in the pending alerts list the next time the pending alerts window display is refreshed.

Selection of the HELP action bar in the Pending Alerts Window of FIGURE 5 requests help information be displayed to the user for the alerts event window itself.

Once the initial alert event occurrence has been presented to the user, the system enters the state of Pending Alerts. While in this state, several conditions may occur based on actions taken by the user or requests made by client application programs. First, all displayed windows are either closed or minimized to their icon representation by the user In this case, while the ALERTS PENDING indication on each individual application window is no longer visible to the user, the alerts pending window is still visible on the display thus indicating one or more pending alerts.

When the server program is requested to display an applications program window the user interface server program will turn on (make visible) the ALERTS PENDING indication on each such window as long as alerts are actually pending. That is, the ALERTS PENDING indication will display in each maximized applications program window as long as the Pending Alerts Queue contains any pending (unresolved) Alerts.

Whenever the ALERTS PENDING indication is active in a maximized applications window the user may select the ALERTS PENDING indicator to cause the alerts pending window to be displayed. At this point, the options to view or delete the selected alert event(s) are available to the user, as described above.

While the Alerts Pending window of FIGURE 5 is displayed, additional alert events may be detected by the user interface server program. Upon detection of subsequent alert events, the user interface server program will refresh the Pending Alerts List of FIGURE 5 displayed to the user.

Alternatively, the user has the option to disable this automatic refresh of the Pending Alerts list while the terminal is displaying the list, and enable user initiated requests for refresh of the Pending Alerts list. In this mode, the REFRESH NOW action is enabled making it available for user selection. The REFRESH NOW action is mutually exclusive with the REFRESH ON action, which leads the user through the Alerts Message Box of FIGURE 4..

In the case of No Alerts Pending, that is, when all alert conditions have been resolved, no alert events remain pending. The user interface server program removes the ALERTS PENDING indication of FIGURE 3 from all currently 1)loaded but not displayed windows, and 2) all displayed windows. The Alerts Pending Window of FIGURE 5 is removed from the display, i.e., made invisible, and its icon disappears.

Using this method, alert event indications are visually presented to the user as soon as the alert events are detected and a visual indication is presented to the user whenever there are pending alert events. The user is presented the option to view the details of one or more of the pending alerts or to delete one or more pending alerts.

According to the method of the invention there is provided a method of displaying exception condition event indications to a user in a distributed client/server Graphical User Interface (GUI) environment. According to the method of the invention the user sees the exception condition event indication regardless of the display state of application windows at the time the exception condition is detected. According to a further embodiment of the method of the invention the user is presented with an indication of the existence of pending unresolved evens even when in application having a maximized window.

The psuedo code for carrying out the method of the invention is as shown in Table I - Psuedo Code.

Table I

Pseudo Code

```
Event:      Alert Event Detected
            Add Alert Event to the Pending Alerts Queue
            Set Server Alerts Pending State Flag = On
            Load Alerts Pending Indicator Bit Map
            Do for all Loaded Panels
                  Update System Menu
                        Add Alerts Pending Indicator Menu Item
            Enddo
            Display Alert Event Message Box
            Wait for User To Selecy Action
            Switch (Action Selected)
                  Case (View)
                        Add Current Alert Event To Pending
                              Alerts List
                        Select (highlight) the Current Alert
                              Event In The Pending Alerts
                              List
```

```
                Endif
                Remove Alert Event from Pending
                        Alert Event Queue
                Delete Current Alert Event From
                        Pending Alerts List
          Enddo
          Break
    Case (Action Bar - View - Refresh - On)
          Disable The Refresh Action Selection
          Break
    Case (Action Bar - View - Refresh - Off)
          Enable The Refresh Now Action Selection
          Break
    Case (Action Bar - View - Refresh Now)
          Add Alert Events Detected Since Last
                  Pending Alerts List Update To The
                  Pending Alerts List
          Refresh Display of Pending Alerts Panel
          Break
    Case (Push Button - Refresh Now)
          Add Alert Events Detected Since Last
                  Pending Alerts List Update To The
                  Pending Alerts List
          Refresh Display of Pending Alerts Panel
          Break
Endswitch
```

EP 0 528 396 A2

```
Process:   Alert Event Detail Panel Action Selection
           Switch (Action Selected)
               Case (Push Button - Delete)
                   Delete the Alert Event from the Pending
                       Alerts Queue
                   Delete the Alert Event from the Pending
                       Alerts Display List
                   Remove The Alert Event Detail Panel
                       From The Display
                   Break
               Case (Push Button - Cancel)
                   Remove The Alert Event Detail Panel
                       From The Display
                   Break
           Endswitch
```

While the invention has been described with respect to controlling an industrial process having measurable physical outputs, the method of this invention may also be used to post an alert of other events, such as the existence of a queue of unreturned phone calls, or the existence of work in progress or to be started.

**Claims**

1. A method of controlling an industrial process having a plurality of states and controlled with a client-server multi-processor control system operating in a windowed, multi-tasking, multi-thread environment, comprising the steps of:
   a. detecting an anomalous state of the industrial process;
   b. displaying a model alert event box corresponding to the anomalous state of the industrial process; and
   c. generating an alerts pending indication in maximized applications window displays as long as any alerts corresponding to anomalous states remain unresolved.

2. The method of claim 1 further comprising the steps of:
   d. generating a pending alerts window listing all unresolved alerts corresponding to anomalous states of the industrial process; and
   e. generating an alert detail window corresponding to the unresolved anomalous state of the physical system.

3. The method of claim 1 and/or 2 comprising generating a pending alerts window listing all unresolved alerts corresponding to anomalous states of the industrial process.

4. The method of one or more of claims 1 - 3 comprising generating an alert detail window corresponding to the unresolved anomalous state of the physical system.

5. An industrial process controller for controlling an industrial process having a plurality of states, comprising:
   a. a client-server multi-processor control system having a windowed, multi-tasking, multi-thread environment:
   b. sensor means for detecting an anomalous state of the industrial process;

8

c. display means for displaying a modal alert event box corresponding to the anomalous state of the industrial process; and

d. means for generating an alerts pending indication in maximized applications window displays as long as any alerts corresponding to anomalous states remain unresolved.

6. The system of claim 5 comprising means for generating a pending alerts window listing all unresolved alerts corresponding to anomalous states of the industrial process.

7. The system of claim 5 comprising means for generating an alert detail window corresponding to the unresolved anomalous state of the physical system.

8. The system of one ore more of the claims 5 - 7 further comprising:

e. generating a pending alerts window listing all unresolved alerts corresponding to anomalous states of the industrial process; and

f. generating an alert detail window corresponding to the unresolved anomalous state of the physical system.

FIG.1

INITIAL ALERT EVENT DETECTION BY SENSOR

FOREGROUND DISPLAY OF MODAL ALERT EVENT BOX

"VIEW"
DISPLAY PENDING ALERTS WINDOW SHOWING ALL PENDING ALERTS IN
LIST FORMAT, ENABLING USER TO SELECT ONE OR MORE PENDING
ALERT EVENTS FOR DETAILED VIEWING
(CURRENT ALERT EVENT DISPLAYED AT THE TOP OF THE PENDING
ALERT LIST AND HIGHLIGHTED FOR DETAILED VIEWING)

"FILE"
...........''DISPLAY"
(ALERT DETAIL WINDOW DISPLAYED)

"DELETE"
(ALERT EVENT DELETED FROM THE PENDING ALERT LIST)

"CANCEL"
(ALERT EVENT REMAINS PENDING IN PENDING
ALERTS QUE, THE PENDING ALERTS WINDOW)

"ALERTS PENDING"
(VISIBLE IN EACH APPLICATION WINDOW AS
LONG AS ALERTS ARE ACTUALLY PENDING)

FIG.2

| — | "ALERT" | VALVE SETTINGS | $\vee$ | $\wedge$ |

YOU ARE NOW LOOKING AT THE SETTINGS FOR VALVE 6294

.875 OPEN

31.2 PSI -> 30.9 PSI

FIG.3

```
┌──┬──────────────────────────┐
│ ─│   ALERT INDICATION       │
├──┴──────────────────────────┤
│         AN  ALERT  OCCURRED: │
│  ╱──╲   ALERT  UAM0105       │
│ │ !  │  DATE:  08-16-91      │
│ │ ·  │                       │
│  ╲──╱   TIME:  10:22:19  AM  │
│         ORIG:                │
│         UITSTUTLNODERSP7     │
│                   CSZALMSA   │
│  ┌────┐  ┌──────┐  ┌────┐    │
│  │VIEW│  │CANCEL│  │HELP│    │
│  └────┘  └──────┘  └────┘    │
└──────────────────────────────┘
```

**FIG.4**

```
┌──┬─┬───────────────────────────────────────────────────────────┐
│ ─│▼│                 PENDING  ALERTS                            │
└──┴─┴───────────────────────────────────────────────────────────┘
```

FILE   VIEW   HELP

ALERT MESSAGES

```
┌──────────────────────────────────────────────────────┬─┐  ┌───────────┐
│UAM0105:  08-16-91  09:43:03  AM  UITSTUTL.NODERSP7    │▲│  │REFRESH NOW│
├──────────────────────────────────────────────────────┼─┤  └───────────┘
│UAM0105:  08-16-91  08:52:08  AM  UITSTUTL.NODERSP7    │ │
│UAM0105:  08-16-91  08:51:23  AM  UITSTUTL.NODERSP7    │ │
│UAM0105:  08-16-91  08:40:55  AM  UITSTUTL.NODERSP7    │ │
├──────────────────────────────────────────────────────┤ │
│UAM0105:  08-16-91  08:23:30  AM  UITSTUTL.NODERSP7    │ │
├──────────────────────────────────────────────────────┤ │   **FIG.5**
│UAM0105:  08-16-91  08:22:05  AM  UITSTUTL.NODERSP7    │ │
├──────────────────────────────────────────────────────┤ │
│                                                      │ │
│                                                      │▼│
└──────────────────────────────────────────────────────┴─┘
```

```
┌──┬─┬───────────────────────────────────────────────────────────┐
│ ─│▼│ UAM0105:  08:16:91  08:23:30  AM  UITSTUTL.NODERSP7        │
└──┴─┴───────────────────────────────────────────────────────────┘
┌───────────────────────────────────────────────────────────────────┐
│ UAM0105:  08-16-91  08:23:30  AM  UITSTUTL.NODERSP7               │
│ THIS IS A WARNING TYPE MESSAGE WITH 5 INSERTS:  THIS IS THE 1ST INSERT│
│                          THIS IS THE 2ND INSERT                   │
│                          THIS IS THE 3RD INSERT                   │
│                          THIS IS THE 4TH INSERT                   │
│                          THIS IS THE 5TH INSERT                   │
│                                                                   │
│                                                                   │
└───────────────────────────────────────────────────────────────────┘
```

┌────────┐  ┌────────┐  ┌────┐
│ DELETE │  │ CANCEL │  │HELP│
└────────┘  └────────┘  └────┘

**FIG.6**